# EUROPÄISCHE PATENTANMELDUNG

(11) **EP 2 564 805 A2**
(43) Veröffentlichungstag der Anmeldung: **06.03.2013**
(21) Anmeldenummer: 12181444.6
(22) Anmeldetag: 23.08.2012
(51) Int. Cl.: A61C 7/08, A61C 13/34

(54) **Verfahren und Setup-Modell zum Herstellen eines Satzes von orthodontischen Schienen**

(30) Priorität: 31.08.2011 DE 102011053151
(71) Anmelder: Bernhard Förster GmbH, 75172 Pforzheim (DE)
(72) Erfinder: Wagner, Carsten, 75015 Bretten (DE)
(74) Vertreter: Twelmeier Mommer & Partner

(57) **Zusammenfassung**

Die Erfindung betrifft ein Verfahren zum Herstellen eines Satzes von Schienen (5) zur Korrektur von Zahnfehlstellungen eines Patienten, wobei aus einer Ist-Stellung der Zähne des Patienten eine Sollstellung ermittelt wird, Zahnmodelle (1) von Zähnen oder Zahngruppen des Patienten hergestellt werden, die auf einem Träger (2) zu einem Gebissmodell angeordnet werden können. Erfindungsgemäß ist vorgesehen, dass ein Satz von Trägern (2) hergestellt wird, die jeweils für jedes der Zahnmodelle (1) einen Steckplatz aufweisen, dessen Position und Ausrichtungen eine Stellung des Zahnmodells (1) vorgibt, wobei die von den Trägern (2) vorgegebenen Stellungen eine Serie bilden, die in Schritten zu der Sollstellung führt, und die Zahnmodelle (1) nacheinander auf die einzelnen Träger (2) gesteckt und dadurch jeweils ein Gebissmodell hergestellt wird und von jedem dieser Gebissmodelle durch Tiefziehen eine Schiene (5) hergestellt wird.

## Beschreibung

Die Erfindung betrifft ein Verfahren zum Herstellen eines Satzes von Schienen zur Korrektur von Zahnfehlstellungen eines Patienten.

Aus der US 7,357,636 B2 ist bekannt, dass als Alternative zu Brackets oder Zahnspangen transparente Kunststoffschienen zur Korrektur von Zahnfehlstellungen verwendet werden können. Die Zahnbewegungen, welche sich mit einer einzigen Schiene erreichen lassen, sind recht begrenzt. Zur Behandlung einer Zahnfehlstellung wird deshalb ein Satz von typischer Weise etwa 10 bis 50 Schienen benötigt, die nacheinander jeweils einige Tage oder Wochen getragen werden. Jede Schiene eines solchen Satzes wird für einen Behandlungsschritt verwendet, an dessen Ende die Zähne eine Zwischenposition erreicht haben, die etwas näher an der angestrebten Sollposition ist als die Position zu Begin des Behandlungsschrittes. Mit der letzten Schiene des Satzes wird dann schließlich die Sollposition der Zähne des Patienten erreicht.

Derartige Schienen zur Korrektur von Zahnfehlstellungen können aus transparentem Kunststoff hergestellt, so dass diese im Vergleich zu Brackets oder Zahnspangen nahezu unsichtbar sind. Viele Patienten entscheiden sich aus diesem Grund, Zahnfehlstellungen mit einem Satz von transparenten Kunststoffschienen behandeln zu lassen.

Aus der US 7,357,636 B2 ist es bekannt, einen Satz von Kunststoffschienen zur Korrektur von Zahnfehlstellungen herzustellen, indem für einen Patienten zunächst ein Gebissmodell hergestellt wird, dessen Zähne individuell gegenüber einem Träger, der den Kiefer nachbildet, beweglich sind. Das Gebissmodell enthält Mikroaktoren mit denen die Zähne auf dem Träger in die Stellungen gebracht werden können, die bei einem Zwischenschritt der Behandlung angestrebt werden und für die folglich eine Schiene benötigt wird. In jeder dieser Zahnstellungen wird mit dem Modell dann durch Tiefziehen eine Schiene hergestellt. Indem die Zähne des Modells nacheinander in die gewünschten Positionen gebracht werden, können mit diesem Modell durch Tiefziehen alle Schienen eines Satzes zur Korrektur von Zahnfehlstellungen hergestellt werden.

Dieses Herstellungsverfahren bedeutet eine große Erleichterung gegenüber herkömmlichen Verfahren, bei denen ein Gipsmodell vom Gebiss eines Patienten zersägt und die einzelnen Zähne dann mit Modelliermasse von Hand in den gewünschten Positionen angeordnet werden.

Aufgabe der vorliegenden Erfindung ist es, einen Weg aufzuzeigen, wie sich die Kosten zur Herstellung eines Satzes von Schienen zur Korrektur von Zahnfehlstellungen noch weiter reduzieren lassen.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren wird aus einer Ist-Stellung der Zähne des Patienten eine Sollstellung ermittelt, die durch eine ortodontische Behandlung mit Kunststoffschienen erreicht werden soll. Die Ist-Stellung der Zähne kann beispielsweise mit einem Abdruck oder durch ein Röntgenscan ermittelt werden. Die Sollstellung kann rechnerisch aus digitalen Daten der Iststellung ermittelt werden. Möglich ist es aber auch, dass die Sollstellung von einem Kieferorthopäden oder einem erfahrenen Techniker vorgegeben wird, indem dieser eine Sollstellung nach Erfahrungswerten oder Wünschen des Patienten vorgibt.

In einem weiteren Schritt werden Zahnmodelle von Zähnen oder Zahngruppen des Patienten hergestellt, die auf einem Träger zu einem Gebissmodell angeordnet werden können. Anstatt nur einen einzigen Träger zu verwenden, auf dem die Zahnmodelle mit Mikroaktoren beweglich sind und für die Herstellung jeder einzelnen Schiene in eine gewünschte Position gebracht werden, wird erfindungsgemäß ein Satz von Trägern hergestellt, die dann jeweils für die Herstellung einer Schiene verwendet werden. Jeder der Träger weist für jedes der Zahnmodelle einen Steckplatz auf, dessen Position und Ausrichtung eine Stellung des betreffenden Zahnmodells vorgibt. Indem die Zahnmodelle auf die Steckplätze eines Trägers gesteckt werden, wird also ein Gebissmodell hergestellt, bei dem die Zahnstellungen einer angestrebten Zahnstellung bei einem Behandlungsschritt entsprechen. Das durch Aufstecken der Zahnmodelle auf einen Träger hergestellte Gebissmodell wird dann verwendet, um durch Tiefziehen eine Kunststoffschiene herzustellen.

Die von den einzelnen Trägern des Satzes vorgegebenen Stellungen bilden eine Serie, die in Schritten zu der Sollstellung führt. Indem die Zahnmodelle nacheinander auf die einzelnen Träger gesteckt werden, wird jeweils ein Gebissmodell hergestellt, und von jedem diese Gebissmodelle durch Tiefziehen eine Schiene hergestellt.

Der Aufwand des erfindungsgemäßen Verfahrens ist relativ gering, da die Zahnmodelle nur ein einziges Mal hergestellt werden müssen und mit jedem der Träger verwendet werden können, um nacheinander die zum Herstellen der Schienen benötigten Gebissmodelle zu bilden. Die einzelnen Träger können kostengünstig hergestellt werden, beispielsweise als Platten mit Löchern, in welche die Zahnmodelle gesteckt werden können. Durch Lage und Orientierung der Löcher lassen sich die Stellungen der Zahnmodelle präzise vorgeben. Der Fertigungsaufwand eines Satzes derartiger Träger ist wesentlich geringer als der Herstellungsaufwand eines Trägers mit Mikroaktoren zur Bewegung der einzelnen Zähne. Zudem können mit möglichen Störungen oder Defekten von Mikroaktoren verbunden Probleme vermieden werden, da die erfindungsgemäßen Gebissmodelle ohne störanfällige Mechanik und Elektronik auskommen.

Ein weiterer Vorteil der vorliegenden Erfindung ist, dass sich mit minimalem Aufwand eine Ersatzschiene herstellen lässt, beispielsweise falls eine einzelne Schiene von einem Patienten verloren oder beschädigt wird. Der entsprechende Träger und die Zahnmodelle werden einfach wieder zusammengesteckt und das so erzeugte Gebissmodell zum Herstellen einer weiteren Schiene durch Tiefziehen verwendet. Bei einem aufwendigen Modell mit Mikroaktoren ist dies dagegen nicht so leicht möglich, da die Mikroaktoren aus wirtschaftlichen Gründen zur Herstellung von Schienen für viele Patienten verwendet werden müssen. Dies bedeutet, dass ein für einen Patienten hergestelltes Gebissmodell wieder zerlegt werden muss, nachdem ein Satz von Schienen hergestellt wurde. Zwar ist es grundsätzlich möglich, die Zahnmodelle bei Bedarf erneut auf einem Träger mit Mikroaktoren zu montieren, jedoch ist dieser Aufwand um ein vielfaches höher als das einfache Aufstecken von erfindungsgemäßen Zahnmodellen auf einen Träger des erfindungsgemäßen Verfahrens.

Für das erfindungsgemäße Verfahren kann für jeden einzelnen Zahn des Patienten ein Zahnmodell hergestellt werden. Möglich ist es aber auch, dass ein Zahnmodell für mehrere Zähne, also eine Gruppe von Zähnen hergestellt wird. Diese Vorgehensweise bietet sich an, wenn benachbarte Zähne des Patienten in ihren Relativpositionen zueinander nicht korrigiert werden müssen. In diesem Fall können beispielsweise zwei oder drei benachbarte Zähne zu einem Zahnmodell zusammengefasst werden. Dies vereinfacht das Aufstecken der Zahnmodelle auf einen Träger, da weniger Zahnmodelle aufgesteckt werden müssen. Zudem vereinfacht sich dadurch auch die Herstellung der Träger, da weniger Steckplätze benötigt werden.

Die Steckplätze können in einfacher Weise durch Löcher vorgegeben sein, in welche Fortsätze der Modelle, beispielsweise Stifte, passen. Die Löcher können unterschiedlich geneigt sein, um eine gewünschte Neigung eines Zahnmodells vorzugeben. Dabei können sich die Neigungen der Löcher verschiedener Steckplätze eines Trägers unterscheiden und dadurch unterschiedliche Neigungen der einzelnen Zahnmodelle vorgeben. Ebenso bedeutsam ist aber, dass sich auch die Neigungen eines Steckplatzes bei den verschiedenen Trägern des Satzes unterscheiden können. Auf diese Weise können Schienen hergestellt werden, die dann bei einer orthodontischen Behandlung eine Änderung der Zahnneigung bewirken.

Indem die Löcher als Sacklöcher ausgebildet sind, kann der Boden des Sacklochs vorteilhaft als Anschlag verwendet werden und vorgeben, wie weit der Fortsatz eines Modells in das Loch hineingesteckt werden kann. Auf diese Weise kann dann auch die relative Höhe der Zahnmodelle zueinander vorgegeben werden, beispielsweise falls einzelne Zähne des Patienten bei der Behandlung durch die hergestellten Schienen tiefer in den Kiefer hineingedrückt werden sollen.

Bei einem Steckplatz kann ein Anschlag, der definiert, wie weit ein Fortsatz des zu dem Steckplatz passenden Modells in den Träger hineingesteckt werden kann, beispielsweise auch durch eine Anschlagfläche gebildet ist, die ein Loch zum Einstecken eines Modelfortsatzes umgibt. In diesem Fall hat das Zahnmodell auch einen Anschlag, beispielsweise die Unterseite eines Modells einer Zahnkrone, die auf einem Fortsatz, beispielsweise in Form eines Stifts, angeordnet ist. Die Anschlagfläche des Trägers kann beispielsweise als ein Sockel ausgebildet sein oder einfach die Oberfläche des Trägers.

Die Löcher in dem erfindungsgemäß verwendeten Träger können Langlöcher sein oder einen anderen von der Kreisform abweichenden Querschnitt haben. Vorteilhaft lässt sich auf diese Weise eine Verdrehsicherung der Zahnmodelle auf dem Träger erreichen. Beispielsweise kann mit einem Langloch eine Nut- und Federverbindung realisiert werden, indem der Fortsatz des Zahnmodells als Feder geformt ist.

Besonders einfach ist es, wenn die Löcher als zylindrische Bohrungen ausgebildet sind. Bohrungen lassen sich in einem Träger mit sehr geringem Aufwand in gewünschten Orientierungen und Tiefen herstellen.

Die Fortsätze der einzelnen Modelle können als Stifte ausgebildet sein, die in die Löcher passen. Stifte mit zylindrischem Querschnitt lassen sich kostengünstig herstellen, bzw. sind als Standardteile kostengünstig erhältlich. Auf die Stifte können Modelle der Zahnkronen aufgesetzt werden und so die benötigten Zahnmodelle hergestellt werden.

Wenn die Steckplätze des Trägers als zylindrische Bohrungen ausgebildet sind, ist es vorteilhaft, wenn jeder Steckplatz mindestens zwei Bohrungen aufweist und entsprechend die Zahnmodelle jeweils mindestens zwei Stifte aufweisen. Wenn nämlich ein Zahnmodell mit zwei Stiften in zwei Bohrungen gesteckt wird, kann das Zahnmodell sich nicht mehr auf den Träger drehen. Besonders vorteilhaft ist es, wenn ein Steckplatz durch wenigstens zwei Bohrungen mit unterschiedlichem Durchmesser definiert ist, da dann ein Zahnmodell nur in einer eindeutigen Orientierung auf den Träger gesteckt werden kann. So lässt sich eine Fehlerquelle beim Herstellen eines Gebissmodells durch Aufstecken der Zahnmodelle auf den Träger ausschließen.

Eine vorteilhafte Weiterbildung der Erfindung sieht vor, dass Zwischenräume zwischen den Zahnmodellen nach dem Aufstecken auf einen Träger aufgefüllt werden, bevor durch Tiefziehen eine Schiene hergestellt wird. Zwischenräume zwischen den Zahnmodellen können beispielsweise mit einer Paste oder einem Pulver aufgefüllt werden. Durch das Auffüllen von Zwischenräumen lässt sich der Tragekomfort der danach hergestellten Schiene erhöhen und deren Herstellung vereinfachen. Selbst wenn Zwischenräume zwischen den einzelnen Zahnmodellen dem angestrebten Gebisszustand bei einem Zwischenschritt der Behandlung entsprechen, ist es besser, wenn die Schiene Zwischenzahnbereiche nicht detailliert abbildet, da sich die Schiene dann leichter auf die Zähne des Patienten aufsetzen lässt. Das Auffüllen von Zwischenräumen mit einer Paste, einem Pulver oder ähnlichem erfordert keinen großen Aufwand und steht einer mehrfachen Verwendung der Zahnmodelle nicht entgegen.

Ein weiterer Aspekt der vorliegenden Erfindung betrifft ein orthodontisches Setup-Modell bestehend aus Zahnmodellen von Zähnen oder Zahngruppen eines Patienten und einem Träger, der für jedes der Zahnmodelle einen Steckplatz aufweist, der durch ein oder mehrere Löcher, vorzugsweise Sacklöcher, definiert ist, in die jeweils ein Fortsatz der Zahnmodelle passt. Ein solches Setup-Modell ist ein Gebissmodell, das bei dem erfindungsgemäßen Verfahren hergestellt wird, indem Zahnmodelle auf einen Träger gesteckt werden.

Zum Herstellen eines Satzes von transparenten Kunststoffschienen zur Korrektur von Zahnfehlstellungen eines Patienten dient eine Serie von derartigen orthodontischen Setup-Modellen mit einer Serie von Trägern, die durch Einstecken der Zahnmodelle in die dafür vorgesehenen Steckplätze eines der Träger nacheinander zu Gebissmodellen ergänzt werden können, wobei die Zahnstellungen der Gebissmodelle geplante Zwischenschritte der Zahnstellungen eines Patienten bei einer orthodontischen Behandlung darstellen.

Weitere Einzelheiten und Vorteile der Erfindung werden an Ausführungsbeispielen unter Bezugnahme auf die beigefügten Zeichnungen erläutert. Gleiche und einander entsprechende Teile sind dabei mit übereinstimmenden Bezugszahlen bezeichnet. Es zeigen:
- Fig. 1: Ist-Stellung der Zähne eines Patienten;
- Fig.2: ein Zahnmodell eines Zahns des Patienten;
- Fig.3: einen Träger mit Steckplätzen für Zahnmodelle;
- Fig.4: ein Gebissmodell mit dem in Fig.3 gezeigten Träger und aufgesteckten Zahnmodellen;
- Fig.5: eine weitere Ansicht zu Fig.4;
- Fig.6: einen weiteren Träger mit Steckplätzen; und
- Fig.7: ein Gebissmodell mit dem in Fig.6 gezeigten Träger und aufgesteckten Zahnmodellen.
- Fig.8: durch Tiefziehen mit einem Gebissmodell hergestellte Kunststoffschiene.

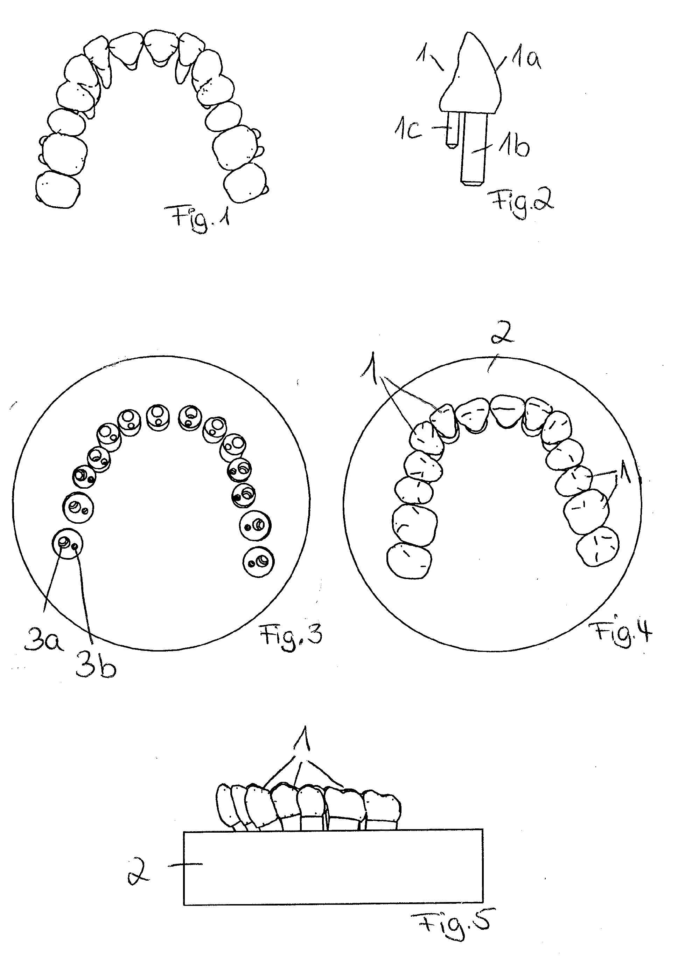

Figur 1 zeigt eine schematische Darstellung der Zähne eines Patienten in einer Ist-Stellung vor Beginn einer orthodontischen Behandlung. Zur Korrektur von Zahnfehlstellungen wird zunächst die Ist-Stellung der Zähne des Patienten ermittelt, beispielsweise mit einem Gebissabdruck oder durch Röntgen. Die so gewonnenen Daten über die Zähne des Patienten können digitalisiert werden und daraus eine Sollstellung berechnet werden, die als Ergebnis der orthodontischen Behandlung angestrebt wird. Eine Sollstellung kann aber beispielsweise auch von einem Kieferorthopäden oder einem erfahrenen Zahntechniker vorgegeben werden.

Mit einer einzelnen Kunststoffschiene 5 lässt sich in der Regel nur eine kleine Korrektur einer Zahnfehlstellung bewirken. Für eine orthodontische Behandlung ist deshalb ein ganzer Satz von Schienen 5 erforderlich, die nacheinander eingesetzt werden und jeweils einen Korrekturschritt hin zu der Sollstellung bewirken. Die bei der Behandlung angestrebten Zwischenpositionen, für die jeweils eine Schiene 5 hergestellt werden muss, können rechnerisch aus der Ist-Stellung der Zähne des Patienten zu Beginn der Behandlung und der angestrebten Sollstellung ermittelt werden. Möglich ist es aber auch, dass die Zwischenpositionen nach Erfahrungswerten von einem Kieferorthopäden oder einem Zahntechniker vorgegeben werden.

Zur Herstellung der Kunststoffschienen 5 zur Zahnkorrektur werden zunächst von den Zähnen des Patienten Zahnmodelle 1 hergestellt. Ein Beispiel eines solchen Zahnmodells 1 ist in Figur 2 dargestellt. Das Zahnmodell 1 hat ein Oberteil 1 a, das die Zahnkrone nachbildet. Das Oberteil 1 a des Zahnmodells 1 sitzt auf einem Fortsatz, beispielsweise einem oder mehreren Stiften 1 b, 1 c. Bei dem dargestellten Ausführungsbeispiel ist das Modell der Zahnkrone an zwei Stiften 1 b, 1 c befestigt. Diese beiden Stifte 1b, 1 c sind bevorzugt zylindrisch geformt und haben unterschiedliche Durchmesser, wie dies bei dem dargestellten Ausführungsbeispiel der Fall ist.

Für jede herzustellende Schiene 5 wird ein Träger 2 hergestellt, der Steckplätze für die einzelnen Zahnmodelle 1 aufweist. Ein Ausführungsbeispiel eines solchen Trägers 2 ist in Figur 3 dargestellt. Die Steckplätze des Trägers 2 sind durch Löcher 3a, 3b definiert, in welche die Stifte 1 b, 1 c der Zahnmodelle 1 passen. Die Löcher 3a, 3b geben durch ihre Position und ihre Neigung die Position und Neigung der einzelnen Zahnmodelle 1 vor. Bevorzugt ist zumindest eines der Löcher 3a, 3b eines Steckplatzes ein Sackloch (3a, 3b), so dass durch die Tiefe der Sacklöcher auch vorgegeben ist, auf welcher Höhe das Oberteil 1 a bzw. die Zahnkrone eines in den Träger 2 eingesteckten Zahnmodells 1 angeordnet ist. Ein Träger 2 mit Zahnmodellen 1 bildet ein orthodontisches Setup-Modell. Durch Einstecken der Zahnmodelle 1 in die Steckplätze des Trägers 2 wird ein Gebissmodell hergestellt, wie es in den Figuren 4 und 5 in verschiedenen Ansichten dargestellt ist. Der Träger 2 kann beispielsweise eine einfache Platte mit Löchern 3a, 3b sein und kann deshalb kostengünstig hergestellt werden.

Die einzelnen Zahnmodelle 1 können mit einer Markierung, beispielsweise einer Nummer versehen sein, die angibt welchem Zahn des Patienten das Zahnmodell 1 entspricht. Durch die Markierung kann insbesondere vorgegeben werden, in welchen Steckplatz eines Trägers 2 das betreffende Zahnmodell 1 zu stecken ist.

Der Träger 2 kann für die einzelnen Zahnmodelle 1 jeweils Sockel 4 aufweisen, in dem sich die Löcher 3a, 3b befinden, in welche die Stifte 1b, 1 c der Zahnmodelle 1 eingesteckt werden. Die Sockel 4 können dabei unterschiedliche Höhen haben und unterschiedlich geneigt sein. Die Sockel 4 können einen Anschlag bilden, auf dem ein Zahnmodell 1 mit einer Anschlagfläche, beispielsweise der Unterseite seines Oberteils 1 a aufliegt. Die Zahnmodelle 1 sind dann mechanisch besonders gut in ihren Positionen unterstützt. An sich kann auf Sockel 4 aber auch verzichtet werden, um die Fertigung der Träger 2 zu vereinfachen. Bereits durch das Zusammenwirken von Löchern 3a, 3b und Stiften 1b, 1 c lässt sich eine mechanisch zuverlässige Positionierung der Zahnmodelle 1 erreichen.

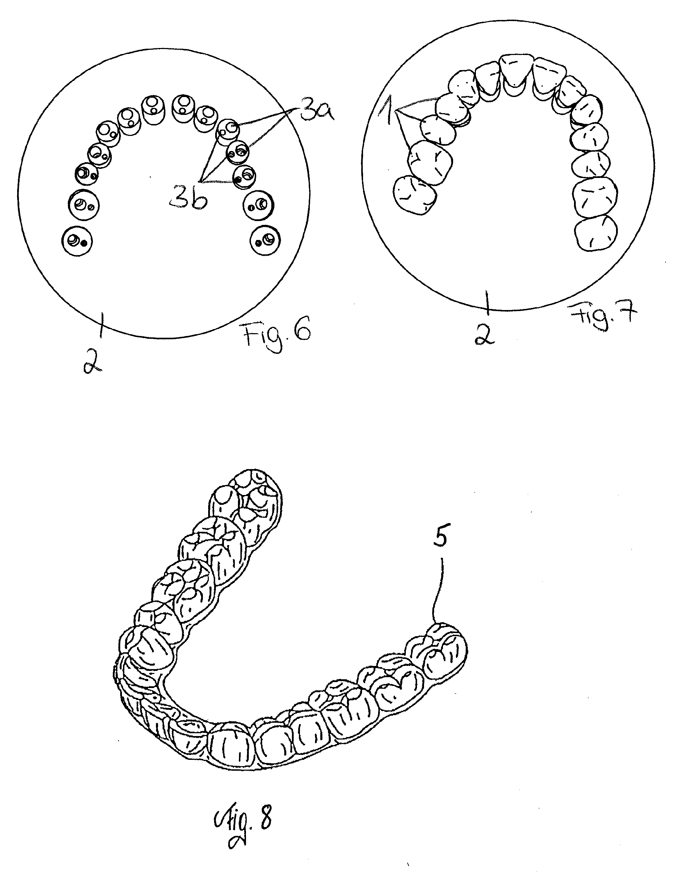

Das durch Aufstecken der Zahnmodelle 1 auf einen Träger 2 hergestellte Gebissmodell wird dann als Tiefziehform verwendet, um eine transparente Kunststoffschiene 5 herzustellen, wie sie schematisch in Figur 8 dargestellt ist. Dabei kann es vorteilhaft sein, Zwischenräume zwischen den einzelnen Zahnmodellen 1 und/oder der Unterkannte der Oberteile 1 a bzw. Zahnkronen der Zahnmodelle 1 und dem Träger 2 aufzufüllen, beispielsweise mit einem Pulver oder einer Paste.

Um einen Satz von Schienen 5 zur Korrektur von Zahnfehlstellungen eines Patienten herzustellen, wird ein Satz von Trägern 2 hergestellt. Der Satz besteht aus mehreren unterschiedlichen Trägern 2, beispielsweise 10 bis 50 Trägern 2. Die einzelnen Träger 2 eines Satzes unterscheiden sich in ihren Steckplätzen, nämlich in der Lage der Steckplätze zueinander und/oder der Orientierung der Steckplätze. Die Steckplätze eines jeden Trägers 2 geben jeweils eine Zahnstellung vor, die als Zwischenschritt bzw. als Endschritt einer orthodontischen Behandlung angestrebt werden. In Figur 6 ist ein Ausführungsbeispiel eines weiteren Trägers 2 dargestellt. Wie man sieht sind die Steckplätze dieses Trägers 2 etwas anders angeordnet als bei dem in Figur 3 dargestellten Träger 2. Durch Aufstecken der Zahnmodelle 1 auf den in Figur 6 dargestellten Träger 2 wird deshalb ein Gebissmodell hergestellt, dessen Zahnstellung etwas näher an der angestrebten Sollstellung ist. Dieses Gebissmodell ist in Figur 7 dargestellt.

### Bezugszahlen

- 1: Zahnmodell
- 1 a: Oberteil
- 1b: Stift
- 1 c: Stift
- 2: Träger
- 3a: Loch
- 3b: Loch
- 4: Sockel
- 5: Kunststoffschiene

## Patentansprüche

1. Verfahren zum Herstellen eines Satzes von Schienen (5) zur Korrektur von Zahnfehlstellungen eines Patienten, wobei aus einer Ist-Stellung der Zähne des Patienten eine Sollstellung ermittelt wird, Zahnmodelle (1) von Zähnen oder Zahngruppen des Patienten hergestellt werden, die auf einem Träger (2) zu einem Gebissmodell angeordnet werden können,
**dadurch gekennzeichnet, dass**
ein Satz von Trägern (2) hergestellt wird, die jeweils für jedes der Zahnmodelle (1) einen Steckplatz aufweisen, dessen Position und Ausrichtungen eine Stellung des Zahnmodells (1) vorgibt, wobei die von den Trägern (2) vorgegebenen Stellungen eine Serie bilden, die in Schritten zu der Sollstellung führt, und die Zahnmodelle (1) nacheinander auf die einzelnen Träger (2) gesteckt und dadurch jeweils ein Gebissmodell hergestellt wird und von jedem dieser Gebissmodelle durch Tiefziehen eine Schiene (5) hergestellt wird.

2. Verfahren nach Anspruch 1, **dadurch gekennzeichnet, dass** die Steckplätze durch Löcher (3a, 3b) definiert sind, in die Fortsätze der Zahnmodelle (1) passen, wobei die Löcher (3a, 3b) unterschiedlich geneigt sind.

3. Verfahren nach einem der vorstehenden Ansprüche, **dadurch gekennzeichnet, dass** jeder Steckplatz einen Anschlag aufweist, der definiert, wie weit ein Fortsatz des zu dem Steckplatz passenden Zahnmodells (1) in den Träger (2) hineingesteckt werden kann.

4. Verfahren nach Anspruch 3, **dadurch gekennzeichnet, dass** jeder Steckplatz wenigstens ein Sackloch (3a, 3b) aufweist und der Anschlag als Boden eines Sackloches ausgebildet ist.

5. Verfahren nach Anspruch 3, **dadurch gekennzeichnet, dass** der Anschlag durch eine Anschlagfläche gebildet ist, die ein Loch (3a, 3b) zum Einstecken eines Modelfortsatzes umgibt.

6. Verfahren nach einem der vorstehenden Ansprüche, **dadurch gekennzeichnet, dass** Zwischenräume zwischen den Zahnmodellen (1) nach dem Aufstecken auf einen Träger (2) aufgefüllt werden, vorzugsweise mit einer Paste oder einem Pulver, bevor durch Tiefziehen eine Schiene (5) hergestellt wird.

7. Orthodontisches Setup-Modell bestehend aus Zahnmodellen (1) von Zähnen oder Zahngruppen eines Patienten und einem Träger (2), **dadurch gekennzeichnet, dass** der Träger (2) für jedes der Zahnmodelle (1) einen Steckplatz aufweist, der durch ein oder mehrere Löcher (3a, 3b), vorzugsweise Sacklöcher, definiert ist, in die jeweils ein Fortsatz der Zahnmodelle (1) passt.

8. Orthodontisches Setup-Modell nach Anspruch 7, **dadurch gekennzeichnet, dass** der Träger (2) eine Platte ist.

9. Orthodontisches Setup-Modell nach Anspruch 7 oder 8, **dadurch gekennzeichnet, dass** der Träger (2) Sockel (4) aufweist, in denen die Löcher (3a, 3b) sind.

10. Orthodontisches Setup-Modell nach einem der Ansprüche 7 bis 9, **dadurch gekennzeichnet, dass** die Löcher (3a, 3b) zylindrische Bohrungen sind.

11. Orthodontisches Setup-Modell nach Anspruch 10, **dadurch gekennzeichnet, dass** jedes Zahnmodell (1) als Fortsatz wenigstens zwei Stifte (1b, 1 c) aufweist, die in dazu passende Bohrungen des Trägers (2) passen.

12. Orthodontisches Setup-Modell nach Anspruch 11, **dadurch gekennzeichnet, dass** die beiden Stifte (1 b, 1 c) unterschiedliche Durchmesser aufweisen.

13. Serie von orthodontischen Setup-Modellen nach einem der Ansprüche 7 bis 12, **gekennzeichnet durch** einer Serie von Trägern (2), die **durch** Einstecken der Zahnmodelle (1) in die dafür vorgesehenen Steckplätze eines der Träger (2) nacheinander zu Gebissmodellen ergänzt werden können, wobei die Zahnstellungen der Gebissmodelle geplante Zwischenschritte der Zahnstellungen eines Patienten bei einer orthodontischen Behandlung darstellen.
